Europäisches Patentamt

European Patent Office

Office européen des brevets

(19)

(11) Veröffentlichungsnummer: **0 311 598 B1**

## (12) EUROPÄISCHE PATENTSCHRIFT

(45) Veröffentlichungstag der Patentschrift: **19.11.92**

(51) Int. Cl.5: **F16K 27/04**, F16K 3/08

(21) Anmeldenummer: **88890255.8**

(22) Anmeldetag: **04.10.88**

(54) **Oberteilkartusche für ein sanitäres Einzelabsperrventil.**

(30) Priorität: **08.10.87 AT 2659/87**

(43) Veröffentlichungstag der Anmeldung:
**12.04.89 Patentblatt 89/15**

(45) Bekanntmachung des Hinweises auf die
Patenterteilung:
**19.11.92 Patentblatt 92/47**

(84) Benannte Vertragsstaaten:
**AT BE CH DE ES FR GB GR IT LI NL SE**

(56) Entgegenhaltungen:
**CH-A- 574 067**
**FR-A- 1 488 665**
**US-A- 2 935 293**

(73) Patentinhaber: **IDEAL-STANDARD GMBH**
**Euskirchener Strasse 80**
**W-5300 Bonn 1(DE)**

(72) Erfinder: **Bergmann, Konrad, Dr.**
**Zur Philippsburg 70**
**W-5560 Wittlich(DE)**

(74) Vertreter: **Puchberger, Rolf, Dipl. Ing.**
**Patentanwälte, Dipl. Ing. Georg Puchberger**
**Dipl. Ing. Rolf Puchberger Dipl. Ing. Peter**
**Puchberger Singerstrasse 13 Postfach 55**
**A-1010 Wien(AT)**

EP 0 311 598 B1

## Beschreibung

Die Erfindung betrifft eine Oberteilkartusche für ein sanitäres Absperrventil nach dem Oberbegriff des Anspruches 1. Ein derartiges Absperrventil ist aus der US-A-2 935 293 bekannt.

Bei den bekannten Oberteilkartuschen dieser Art ist es nachteilig, daß manchmal ein Lecken des Wassers eintritt und daß bei der Spindel die Gefahr einer Korrosion und Verkalkung besteht. Es ist Aufgabe der vorliegenden Erfindung, eine Oberteilkartusche der erwähnten Art zu verbessern, die leichtgängige Funktion der Kartusche zu erreichen und das Lecken, die Korrosion und eine Verkalkung zu verhindern.

Erfindungsgemäß wird bei der eingangs erwähnten Oberteilkartusche vorgeschlagen, daß der Mitnehmerstift am unteren Ende mit dem Mitnehmer verschweißt ist und der Raum zwischen Mitnehmer, Mitnehmerstift und beweglicher Dichtscheibe mit Dichtmaterial ausgefüllt ist, daß der Mitnehmerstift am oberen Ende in die Spindel unterschiedlich tief einpreßbar ist je nach den fertigungsbedingten Dickenunterschieden des Scheibenpaares, welches mit längsaxialem Spiel angeordnet und so entsprechend verschieblich ist.

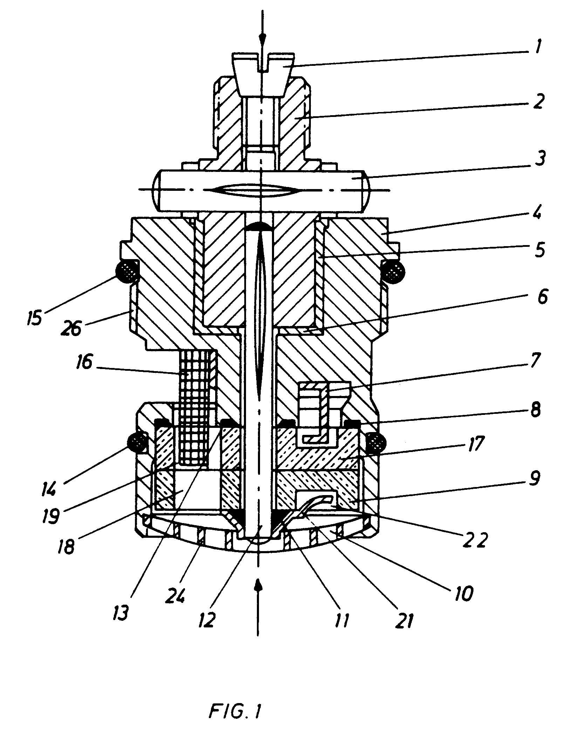

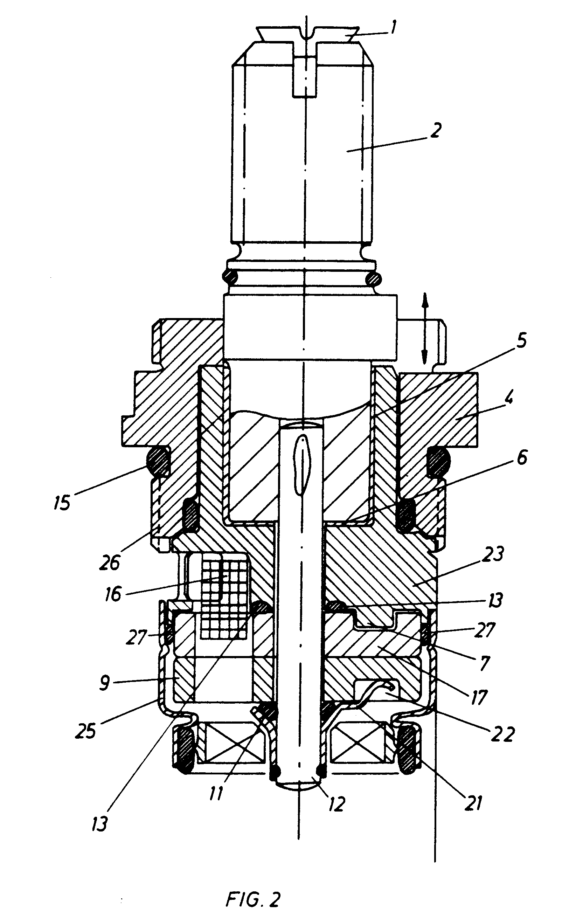

Die Erfindung wird nun anhand der Zeichnungen näher beschrieben. Fig.1 zeigt eine Ausführungsform der Erfindung und Fig.2 eine andere Ausführungsform.

Fig.1 zeigt einen Schnitt durch eine zusammengesetzte Oberteilkartusche für ein sanitäres Einzelabsperrventil. Die Kartusche wird mittels des Gewindes 26 in einer Öffnung montiert und über die O-Ringe 14, 15 abgedichtet. Zur Steuerung des Wasserstromes sind Dichtscheiben 9 und 17 vorgesehen, die mit Öffnungen 18, 19 versehen sind. Es gibt eine Vielzahl derartiger Dichtscheiben, die meist aus $Al_2O_3$ hergestellt werden und deren Oberfläche poliert ist, so daß die aufeinanderliegenden Flächen der beiden Dichtscheiben 9 und 17 eine einwandfreie Abdichtung gewährleisten. Oberhalb der beiden Dichtscheiben befindet sich das Kopfstück 4, an dem das Gewinde 26 vorgesehen ist. In das Kopfstück greift die Spindel 2, die wiederum über die Griffschraube 1 mit einem Betätigungshebel verbunden ist. Im vorliegenden Fall ist die Spindel 2 mit einem Mitnehmerstift 12 verpreßt, der die ortsfeste Dichtscheibe 17 und die bewegliche Dichtscheibe 9 durchsetzt und an seinem unteren Ende mit einem Mitnehmer 21 laserverschweißt ist. Dieser Mitnehmer greift in eine Ausnehmung 22 der beweglichen Scheibe 9 ein, so daß bei einer Bewegung der Spindel 2 über den Mitnehmerstift 12 und den Mitnehmer 21 die Scheibe 9 verdreht wird. Je nach ihrer Stellung wird ein bestimmtes Wasservolumen durch die Öffnungen 18 und 19 hindurchtreten und zur Wasserentnahmestelle fließen können. Zur Geräuschdämpfung ist an der Austrittsöffnung aus den Dichtscheiben ein Gewebeeinsatz 16 oder ein Sieb angeordnet. Die Spindel 2 ist in einer Lagerbuchse 5 gelagert, die einen Boden 6 aufweist. Diese Lagerbuchse besteht in vorteilhafter Weise aus Kunststoff, wodurch Korrosion und Verkalkung an der Spindel verhindert werden. Die Stirnfläche des Kopfstückes 4 ist mit Dichtungen 13 versehen, die dem Durchtritt des Mitnehmerstiftes 12 benachbart sind. Da auch der Raum am Ende des Mitnehmerstiftes zwischen Mitnehmerstift 12, Mitnehmer 21 und beweglicher Dichtscheibe 9 mit einem Dichtmaterial (11) ausgefüllt ist, kann kein Wasser entlang der Spindel lecken, so daß also eine vollständige Dichtigkeit gegeben ist. Es befindet sich auch kein dynamisch belasteter O-Ring an der Spindel.

Das Paket mit den Scheiben 9, 17 wird mit Spiel nach oben und/oder unten angeordnet, d.h.,das Scheibenpaket soll nicht eingeklemmt sein. Während der Montage der Kartusche wird ein Spiel, das zwischen 0,05 bis 0,1 mm betragen kann, in Abhängigkeit von den Unterschieden in der Dicke der Scheibenpaare eingestellt, wobei das Spiel durch fertigungsbedingte Toleranzen bei Keramik gegeben ist. Das Scheibenpaar ist also längsaxial immer geringfügig verschieblich, wodurch die bewegliche Scheibe immer leichtgängig ist.Die Einstellung des Spaltes erfolgt über den unterschiedlich tief in die Spindel 2 einpreßbaren Mitnehmerstift 12, der also nicht mit einem Anschlag in der Spindel 2 zusammenwirkt.

Das untere Ende des Kopfstückes 4 ist glokkenförmig ausgebildet und umgreift die Dichtscheiben 9 und 17. Der glockenförmige Teil des Kopfstückes 4 wird durch ein Grobsieb 24 abgeschlossen. Zusätzlich verbindet noch eine Arretierung 7 das Kopfstück 4 mit der ortsfesten Dichtscheibe 17, wodurch eine weitere Sicherheit gegen ein Lekken gegeben ist. Zur Halterung des Kopfstückes kann noch ein Kerbstift 3 vorgesehen sein, der quer zur Vertikalachse der Oberteilkartusche eingesetzt ist.

In Fig.2 ist eine weitere Ausführungsform der Erfindung dargestellt. Auch diese Figur zeigt einen Schnitt durch eine zusammengesetzte Oberteilkartusche für ein sanitäres Einzelabsperrventil. Eine Spindel 2 ist wiederum mit einem Mitnehmerstift 12 verpreßt und in einer Lagerbuchse 5 mit einem Boden 6 angeordnet. Die Lagerbuchse 5 und der Boden 6 können aus Kunststoff bestehen. Über das Kopfstück 4 wird die Oberteilkartusche mittels des Gewindes 26 in eine Öffnung (nicht dargestellt) eingeschraubt. Über den Dichtring 15 wird die Oberteilkartusche gegen die Öffnung abgedichtet. Im Gegensatz zur Ausführungsform der Fig.1 sitzt bei der gegenwärtigen Ausführungsform das Kopfstück 4 auf einem Mittelteil 23, in dem einerseits die Lagerbuchse 5 mit dem Boden 6 und anderseits die Arretierung 7 für die ortsfeste Dichtscheibe 17 angeordnet sind. Das Kopfstück 4 läßt sich im ausgeschraubten Zustand vom Mittelteil 23 abheben und durch Drehung um 90° und anschließendem Zurückschieben kann man aus einem linksöffnenden Ventil ein rechtsöffnendes Ventil herstellen.

An der Stirnseite des Mittelteiles 23 befinden sich wiederum in der Nähe des Durchtrittes des Mitnehmerstiftes 12 Dichtungen 13, die zusammen mit den Dichtungen 27 eine Abdichtung gegenüber der ortsfesten Dichtscheibe 17 ergeben. Der Mitnehmerstift 12 trägt nahe seines Endes wiederum einen Mitnehmer 21, der in eine Ausnehmung 22 der drehbaren Dichtscheibe 9 eingreift. Die beiden Dichtscheiben 9 und 17 werden hier von einem getrennten Gehäuse 25 umgriffen, das balgförmig ausgebildet ist, wodurch größere Einbautoleranzen überbrückt werden können.

Der Mittelteil 23 kann aus Kostengründen aus Kunststoff gefertigt werden und man erhält auf diese Weise ein sehr verläßliches, billiges und an die Gegebenheiten anpassungsfähiges Ventil.

**Patentansprüche**

1. Oberteilkartusche für ein sanitäres Absperrventil, bestehend aus einem, mit einem Gewinde versehenen Kopfstück (4), welches mittels eines O-Ringes (15) abdichtbar ist, einer in das Kopfstück (4) eingesetzten Spindel (2), die in einer Lagerbuchse (5) angeordnet ist, einer beweglichen, Durchtrittsöffnungen (19) aufweisenden Dichtscheibe (9), die über einen Mitnehmerstift (12) zusammen mit der Spindel (2) angetrieben wird, einer drehfest angeordneten, Durchtrittsöffnungen (19) aufweisenden Dichtscheibe (17), wobei der Mitnehmerstift (12) das Kopfstück (4) oder einen, zwischen Kopfstück (4) und drehfest angeordneter Dichtscheibe (17) angeordneten, Mittelteil (23), die drehfest angeordnete Dichtscheibe (17) und dann die bewegliche Dichtscheibe (9) durchsetzt und am unteren Ende mit einem Mitnehmer (21) verbunden ist, der in eine Ausnehmung (22) der beweglichen Dichtscheibe (9) eingreift, dadurch gekennzeichnet, daß der Mitnehmerstift (12) am unteren Ende mit dem Mitnehmer (21) verschweißt ist, der Raum zwischen Mitnehmer (21), Mitnehmerstift (12) und beweglicher Dichtscheibe (9) mit Dichtmaterial ausgefüllt ist, der Mitnehmerstift am oberen Ende in die Spindel (2) unterschiedlich tief einpreßbar ist je nach den fertigungsbedingten Dickenunterschieden des Scheibenpaares (9, 17), welches mit längsaxialem Spiel angeordnet und so entsprechend verschieblich ist.

2. Oberteilkartusche nach Anspruch 1, dadurch gekennzeichnet, daß die Buchse (5) aus Kunststoff besteht.

3. Oberteilkartusche nach Anspruch 1 oder 2, dadurch gekennzeichnet, daß die Buchse (5) eine Bodenplatte (6) aufweist, die vom Mitnehmerstift (12) durchsetzt wird.

4. Oberteilkartusche nach einem der vorhergehenden Ansprüche, dadurch gekennzeichnet, daß das Kopfstück (4) abhebbar auf einen Mitteil (23) aufgesetzt ist und die Buchse (5) sich im Mittelteil (23) befinden kann.

5. Oberteilkartusche nach einem der vorhergehenden Ansprüche, dadurch gekennzeichnet, daß das Kopfstück (4) oder der Mittelteil (23) an ihrer Vorderfläche nahe dem Durchtritt des Mitnehmerstiftes (12) Dichtungen (13) aufweist.

6. Oberteilkartusche nach einem der vorhergehenden Ansprüche, dadurch gekennzeichnet, daß das Kopfstück (4) oder der Mittelteil (23) über eine Arretierung (7) mit der festen Dichtscheibe (17) verbunden ist.

7. Oberteilkartusche nach einem der vorhergehenden Ansprüche, dadurch gekennzeichnet, daß der Mittelteil (23) selbst die feste Dichtscheibe (17) hält.

8. Oberteilkartusche nach einem der vorhergehenden Ansprüche, dadurch gekennzeichnet, daß der untere Teil des Kopfstückes (4) glockenförmig ausgebildet ist, wobei sich innerhalb des glockenförmigen Raumes die Dichtscheiben (9, 17) befinden.

9. Oberteilkartusche nach einem der vorhergehenden Ansprüche, dadurch gekennzeichnet, daß ein Grobsieb (24) vorgesehen ist.

10. Oberteilkartusche nach einem der vorhergehenden Ansprüche, dadurch gekennzeichnet, daß die Dichtscheiben (9, 17) von einem getrennten Gehäuse (25) umgriffen werden, welches sich am Mittelteil (23) abstützt und mit diesem durch Einbördeln verbindbar ist und die Anschlußdichtungen (27) am Ventilkörper trägt.

11. Oberteilkartusche nach einem der vorhergehenden Ansprüche, dadurch gekennzeichnet, daß der Mittelteil (23) aus Kunststoff gefertigt ist.

**Claims**

1. A top cartridge for a sanitary shut-off valve comprising a head portion (4) which is provided with a screwthread and which can be sealed by means of an O-ring (15), a spindle (2) which is fitted into the head portion (4) and which is arranged in a bearing bush (5), a movable sealing disc (9) which has through openings (19) and which is driven by way of an entrainment pin (12) together with the spindle (2), a non-rotatably arranged sealing disc (17) which has through openings (19), wherein the entrainment pin (12) passes through the head portion (4) or a central part (23) disposed between the head portion (4) and the non-rotatably arranged sealing disc (17), the non-rotatably arranged sealing disc (17) and then the movable sealing disc (9), and is connected at the lower end to an entrainment member (21) which engages into a recess (22) in the movable sealing disc (9), characterised in that the entrainment pin (12) is welded at the lower end to the entrainment member (21), the space between the entrainment member (21), the entrainment pin (12) and the movable sealing disc (9) is filled with sealing material, and the entrainment pin can be pressed at the upper end into the spindle (2) to a different depth depending on the respective differences in thickness, due to manufacture, of the pair of discs (9, 17), which is arranged with longitudinal axial play and is thus correspondingly displaceable.

2. A top cartridge according to claim 1 characterised in that the bush (5) comprises plastics material.

3. A top cartridge according to claim 1 or claim 2 characterised in that the bush (5) has a bottom plate (6) through which the entrainment pin (12) passes.

4. A top cartridge according to one of the preceding claims characterised in that the head portion (4) is removably fitted on to a central part (23) and the bush (5) can be disposed in the central part (23).

5. A top cartridge according to one of the preceding claims characterised in that the head portion (4) or the central part (23) has seals (13) at its front face adjacent the location at which the entrainment pin (12) passes therethrough.

6. A top cartridge according to one of the preceding claims characterised in that the head portion (4) or the central part (23) is connected to the fixed sealing disc (17) by way of an arresting means (7).

7. A top cartridge according to one of the preceding claims characterised in that the central part (23) itself holds the fixed sealing disc (17).

8. A top cartridge according to one of the preceding claims characterised in that the lower part of the head portion (4) is of a bell-shaped configuration, the sealing discs (9, 17) being disposed within the bell-shaped space.

9. A top cartridge according to one of the preceding claims characterised in that there is provided a coarse strainer (24).

10. A top cartridge according to one of the preceding claims characterised in that the sealing discs (9, 17) are embraced by a separate housing (25) which is supported on the central part (23) and can be connected thereto by crimping and carries the connecting seals (27) on the valve body.

11. A top cartridge according to one of the preceding claims characterised in that the central part (23) is made from plastics material.

**Revendications**

1. Cartouche formant la partie supérieure d'un robinet sanitaire, comportant une tête filetée (4) pourvue d'un joint torique (15), un axe pivotant (2) monté dans la tête (4) et tournant dans un palier constitué par une douille (5), un disque d'étanchéité (9) qui présente des ouvertures de passage (19) et qui est entraîné en rotation en même temps que l'axe pivotant (2) par l'intermédiaire d'une tige de liaison (12), un disque d'étanchéité (17) fixe en rotation et présentant des ouvertures de passage (19), la tige de liaison (12) passant à travers la tête (4) ou à travers une pièce intermédiaire (23) montée entre la tête (4) et le disque fixe (17), puis à travers le disque fixe (17) et le disque mobile (9), et se trouvant reliée à son extrémité inférieure avec une pièce d'entraînement (21) qui est engagée dans un évidement (22) du disque mobile (9), caractérisée en ce que la pièce d'entraînement (21) est fixée par soudage sur l'extrémité de la tige de liaison (12), le volume compris entre la pièce d'entraînement (21), la tige de liaison (12) et le disque mobile étant rempli d'un matériau d'étanchéité, et en ce que l'extrémité supérieure de la tige de liaison (12) peut s'enfoncer de manière variable dans l'axe pivotant (2) suivant la différence d'épaisseur d'usinage de la paire de disques (9,17), cette paire étant montée avec un jeu axial et pouvant ainsi coulisser à la demande.

2. Cartouche de robinet selon la revendication 1, caractérisée en ce que la douille (5) est en matière plastique.

3. Cartouche de robinet selon la revendication 1 ou 2, caractérisée en ce que la douille (5) présente une plaque de fond (6) à travers laquelle passe la tige de liaison (12).

4. Cartouche de robinet selon l'une des revendications précédentes, caractérisée en ce que la tête (4) est montée sur une pièce intermédiaire (23) dont on peut la séparer en la soulevant, la douille (5) pouvant se trouver dans la pièce intermédiaire (23).

5. Cartouche de robinet selon l'une des revendications précédentes, caractérisée en ce que la tête (4) ou la pièce intermédiaire (23) porte des joints d'étanchéité (13) sur sa face antérieure à proximité du passage de la tige de liaison (12).

6. Cartouche de robinet selon l'une des revendications précédentes, caractérisée en ce que la tête (4) ou la pièce intermédiaire (23) est reliée au disque fixe (17) par un organe d'arrêt (7).

7. Cartouche de robinet selon l'une des revendications précédentes, caractérisée en ce que c'est la pièce intermédiaire (23) qui maintient elle-même le disque fixe (17).

8. Cartouche de robinet selon l'une des revendications précédentes, caractérisée en ce que la partie inférieure de la tête (4) est en forme de cloche, à l'intérieur du volume de laquelle se trouvent les disques d'étanchéité (9,17).

9. Cartouche de robinet selon l'une des revendications précédentes, caractérisée en ce qu'elle comporte un filtre en treillis à grosses mailles (24).

10. Cartouche de robinet selon l'une des revendications précédentes, caractérisée en ce que les disques d'étanchéité (9,17) sont entourés par un boîtier séparé (25), qui est en appui sur la pièce intermédiaire (23) avec laquelle il peut être relié par sertissage et qui porte les joints de raccordement (27) avec le corps du robinet.

11. Cartouche de robinet selon l'une des revendications précédentes, caractérisée en ce que la pièce intermédiaire (23) est confectionnée en

matière plastique.

FIG. 1

FIG. 2